# EUROPÄISCHE PATENTSCHRIFT

(11) **EP 2 560 853 B1**
(45) Veröffentlichungstag und Bekanntmachung des Hinweises auf die Patenterteilung: **04.12.2013**
(21) Anmeldenummer: 11719173.4
(22) Anmeldetag: 15.04.2011
(51) Int. Cl.: B60W 20/00, B60R 25/00

(54) **HYBRIDFAHRZEUG MIT WEGFAHRSPERRE**
HYBRID VEHICLE WITH AN IMMOBILIZER CIRCUIT
VÉHICULE HYBRIDE AVEC DISPOSITIF IMMOBILISATEUR

(30) Priorität: 17.04.2010 DE 102010015317
(43) Veröffentlichungstag der Anmeldung: 27.02.2013
(73) Patentinhaber: Audi AG, 85045 Ingolstadt (DE)
(72) Erfinder: GRAF, Johann, 93345 Hausen (DE); STEINBRÜCK, Martin, 85080 Gaimersheim (DE)
(74) Vertreter: Brandt, Kai
(86) Internationale Anmeldenummer: PCT/EP2011/001922
(87) Internationale Veröffentlichungsnummer: WO 2011/128109

(56) Entgegenhaltungen:
- EP-A1- 2 058 197
- EP-A2- 1 512 591
- JP-A- 2007 246 070

## Beschreibung

Die Erfindung betrifft ein Verfahren zum Betreiben der Antriebe eines Kraftfahrzeugs mit zumindest zwei Antrieben, gemäß dem Oberbegriff des Patentanspruchs 1. Demgemäß ist für zumindest zwei der Antriebe ein zugehöriges Antriebssteuergerät zum Abgeben von Steuersignalen an dieses jeweils bereitgestellt. Typischerweise gibt es einen Verbrennungsmotor (eine Verbrennungskraftmaschine) und einen elektrischen Antrieb und ein Antriebssteuergerät für den Verbrennungsmotor sowie ein Antriebssteuergerät für den elektrischen Antrieb. Gegebenenfalls gibt es noch ein Getriebesteuergerät zum Abgeben von Steuersignalen an ein Getriebe, von dem Bauteile elektrisch ansteuerbar sind. Eines dieser Steuergeräte oder ein zusätzliches Steuergerät fungiert als Führungssteuergerät. Das Führungssteuergerät hat die Aufgabe, festzulegen, welches Drehmoment von welchem der Antriebe bereitzustellen ist. Ein Spezialfall hiervon ist es, wenn in einer vorbestimmten Situation zumindest einer der Antriebe, der zuvor inaktiv war, aktiviert werden muss, dann legt das Steuergerät dies fest.

Es gibt in einem Kraftfahrzeug eine weitere Funktionalität, bereitgestellt in einem Wegfahrsperrensteuergerät, durch die gewährleistet ist, dass nur bei Erfülltsein zumindest einer bestimmten Bedingung ein zuvor inaktiver Antrieb zum Laufen gebracht wird. Das Wegfahrsperrensteuergerät überprüft typischerweise, ob der Schlüssel eingesteckt ist und umgedreht ist (sog. "Klemme 15"-Zustand) oder es überprüft eine elektronische Kennung des Schlüssels oder allgemein, ob auf irgendeine sonstige Art und Weise eine Berechtigung zum Fahren des Kraftfahrzeugs und damit zum Betreiben der Antriebe vorliegt. Das Wegfahrsperrensteuergerät gibt eine sog. Freischaltung an die einzelnen Antriebssteuergeräte und ggf. das Getriebesteuergerät. Eine Freischaltung kann nach einer vorbestimmten Zeitdauer verfallen. Das Aktivieren des Antriebs erfolgt nur dann, wenn unmittelbar zu diesem Zweck eine Freischaltung gegeben wird oder die letzte Freischaltung mindestens eine bestimmte Zeitdauer zurückliegt, wenn mit anderen Worten das Erfülltsein zumindest einer Bedingung also in einer zuletzt verstrichenen Zeitdauer durch das Wegfahrsperrensteuergerät festgestellt worden ist.

Das Konzept der Freischaltung beinhaltet, dass die Freischaltung beim Start eines Antriebs gegeben sein muss und so lange aufrecht erhalten bleibt, wie eine bestimmte Drehzahl gegeben ist, z. B. bei einem Verbrennungsmotor eine Drehzahl der Kurbelwelle, bei einem Getriebe eine Getriebeeingangsdrehzahl, bei einem Elektromotor dessen Drehzahl.

Die EP 2 058 197 A1 offenbart ein Verfahren zum Betreiben der Antriebe eines Hybridfahrzeugs. Im Anschluss an ein mehrstufiges Authentifizierungsverfahren, bei welchem zum einen eine Authentifizierung über einen Fahrzeugschlüssel bzw. einen Transponder und zum anderen über eine biometrische Authentifizierung durchgeführt wird, erfolgt in Abhängigkeit von den Ergebnissen der jeweiligen Authentifizierungen eine Freigabe bzw. Nicht-Freigabe zur Aktivierung eines Verbrennungsmotors und/oder eines Elektromotors des Hybridfahrzeugs. Für den Fall, dass die Authentifizierung über den Fahrzeugschlüssel bzw. den Transponder und auch über die biometrische Authentifizierung positiv ist, erfolgt sowohl für den Verbrennungs- als auch für den Elektromotor eine Freigabe zur Aktivierung.

In der vorliegend vorausgesetzten Situation, dass das Kraftfahrzeug zumindest zwei Antriebe aufweist, kann es eben aber nun sein, dass ein Antrieb für längere Zeit nach der Freischaltung an sich nicht aktiviert werden würde. Dessen Freischaltung würde dann verfallen. Beispielsweise könnte es sein, dass das Kraftfahrzeug mit Hilfe einer elektrischen Maschine bewegt wird und der Verbrennungsmotor nicht aktiviert wird. Ein Aktivieren des Verbrennungsmotors zu einem deutlich späteren Zeitpunkt wäre dann nicht mehr möglich, weil dessen Freischaltung verfallen ist. Dann würde sich die Hochvoltbatterie im Kraftfahrzeug langfristig aufgrund des Betriebs der elektrischen Maschine entladen, und die Energieversorgung wäre nicht dauerhaft gewährleistet. In einem Extremfall würde das Kraftfahrzeug sogar nicht mehr weiterfahren können.

Es ist Aufgabe der vorliegenden Erfindung, ein Verfahren nach dem Oberbegriff des Patentanspruchs 1 bereitzustellen, durch das in erhöhtem Maße für eine Funktionsfähigkeit eines Kraftfahrzeugs mit zumindest zwei Antrieben gesorgt ist, ohne dass es Einschränkungen beim Diebstahlschutz, also in der Wegfahrsperrenfunktionalität, gibt.

Die Aufgabe wird durch ein Verfahren mit den Merkmalen des Patentanspruchs 1 gelöst.

Somit müssen erfindungsgemäß die Antriebssteuergeräte in der vorbestimmten Situation alle von dem Wegfahrsperrensteuergerät ein Signal erhalten haben (in einer zuletzt verstrichenen bestimmten Zeitdauer), bevor sie mit dem Abgeben von Steuersignalen zum Aktivieren beginnen.

Durch diese Maßnahme ist gewährleistet, dass auch Antriebssteuergeräte zu solchen Antrieben, die gar nicht aktiviert werden, eine Freischaltung erhalten. Dann ist ein späteres Aktivieren möglich. Dadurch, dass sie später aktiviert werden können, kann ein Antrieb an der Stelle eines anderen die Antriebsleistung erbringen, es kann zwischen den Antrieben gewechselt werden. Damit ist für eine ausreichende Funktionssicherheit bei der Fahrt des Kraftfahrzeugs gesorgt.

Zudem ist es erfindungsgemäß vorgesehen, dass ein Antrieb und insbesondere ein Verbrennungsmotor als Antrieb nach einer vorbestimmten Zeitdauer seiner Inaktivität durch das zugehörige Antriebssteuergerät für eine Mindestzeitdauer aktiviert wird.

Es kann auch bei Verwirklichung des erfindungsgemäßen Verfahrens die Maßnahme vorgesehen sein, dass eine Freischaltung nach einer vorbestimmten Zeitdauer des Nichtbetriebs des zugehörigen Antriebs verfällt, wobei der Betrieb anhand einer Drehzahl ermittelt wird. Durch die Aktivierung des Antriebs für eine Mindestzeitdauer nach einer vorbestimmten Zeitdauer seiner Inaktivität wird künstlich unterbunden, dass die Freischaltung verfällt, denn der Verbrennungsmotor sorgt für eine ausreichende Drehzahl innerhalb der Zeitdauer, in der deren Gegebensein einen Verfall der Freischaltung verhindert. Würde die Freischaltung beispielsweise nach einer Zeitdauer von 10 Minuten verfallen, dann wäre es möglich, dass der Verbrennungsmotor alle 9,5 Minuten aktiviert wird, um das Verfallen der Freischaltung zu verhindern.

Bevorzugt ist das bereits erwähnte Getriebesteuergerät zum Abgeben von Steuersignalen an ein Getriebe zusätzlich in dem Kraftfahrzeug bereitgestellt, und es ist als zusätzliche Maßnahme dann vorgesehen, dass auch selbiges von dem Wegfahrsperrensteuergerät in der vorbestimmten Situation ein Signal erhalten haben muss, durch welches das Erfülltsein der Bedingung mitgeteilt wird, und erst dann gibt das Getriebesteuergerät Steuersignale ab. Das Getriebesteuergerät arbeitet typischerweise auf ein Getriebe, das mit dem Verbrennungsmotor in Wirkverbindung steht, sodass es auch hier wünschenswert ist, dass das Getriebesteuergerät gleichzeitig eine Freischaltung erhalten hat, wenn das Getriebe wegen der Inbetriebsetzung des Verbrennungsmotors benötigt wird.

Es sind verschiedene Mechanismen möglich, wie ein Signal von dem Wegfahrsperrensteuergerät zu den Antriebssteuergeräten bzw. gegebenenfalls auch dem Getriebesteuergerät gelangen kann. Bevorzugt senden diese ein Anfragesteuersignal an das Wegfahrsperrensteuergerät, um das (Freigabe-) Signal zu erhalten.

Es ist insbesondere Aufgabe des Führungssteuergeräts, die vorbestimmte Situation zu ermitteln. Dieses sendet in der vorbestimmten Situation naturgemäß ein Anfragesignal an das Wegfahrsperrensteuergerät. Damit sich das Absenden von Anfragesignalen und ein Erhalt von Freigabesignalen nicht zu sehr verzögert, teilt das Führungssteuergerät den anderen Steuergeräten über ein gesondertes Signal mit, dass es ein Anfragesignal an das Wegfahrsperrensteuergerät ausgesandt hat, dann können auch die anderen Steuergeräte zeitig solche Abfragesignale abgeben.

Die vorbestimmte Situation ist insbesondere dann gegeben, wenn ein Fahrzeugführer eine Bedienvorgabe macht, durch die er für das Kraftfahrzeug ein von den Antrieben aufzubringendes Drehmoment anfordert; dies ist typischerweise beim Betätigen eines Fahrpedals ("Gaspedal") der Fall. Eine Drehmomentanforderung kann jedoch auch durch eine Steuereinrichtung gemacht werden; ein Beispiel hierfür ist es, wenn das Kraftfahrzeug selbstgesteuert fährt, z. B. in einem vorbestimmten Abstand oder einem vorausfahrenden Fahrzeug her. Erhöht sich dann der Abstand, kann das Kraftfahrzeug beschleunigt werden, entsprechend gibt es eine Drehmomentanforderung durch ein zugehöriges Steuergerät.

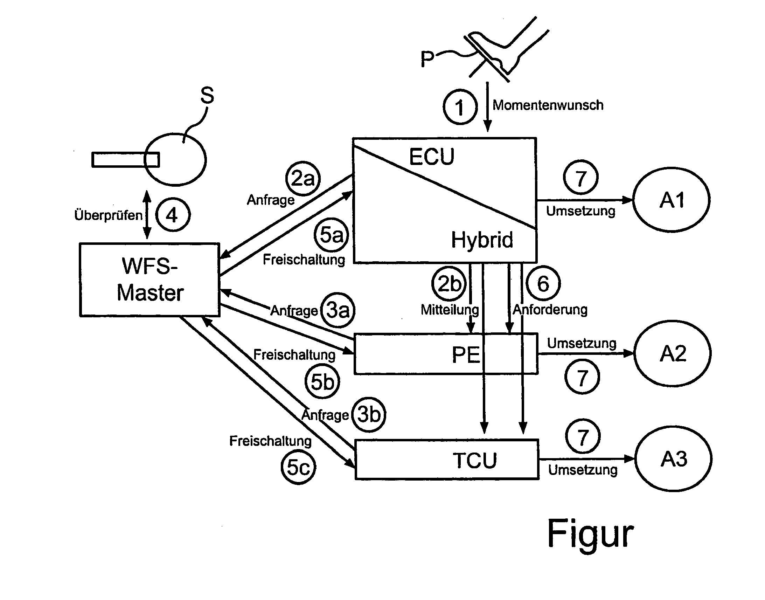

Nachfolgend wird eine bevorzugte Ausführungsform der Erfindung unter Bezug auf die Zeichnung beschrieben, in der die einzige Figur ein schematisches Schaubild der einzelnen Baugruppen eines Kraftfahrzeugs ist, zu denen der Signalfluss anhand der in der Zeichnung gezeigten Pfeile nachfolgend erläutert wird.

Das erfindungsgemäße Verfahren beginnt damit, dass ein Fahrzeugführer ein Fahrpedal P betätigt, wodurch er einen "Momentenwunsch" mitteilt, also eine Bedieneingabe macht, durch die dafür gesorgt werden soll, dass die Antriebe des Kraftfahrzeugs überhaupt ein Drehmoment aufbringen oder ein höheres Drehmoment aufbringen als zuvor.

Ein elektronisches Steuergerät (engine control unit, ECU) für eine Verbrennungskraftmaschine des Kraftfahrzeugs empfängt diesen Momentenwunsch.

Das Kraftfahrzeug soll vorliegend zusätzlich über eine elektrische Maschine verfügen, zu der es ein eigenes Antriebssteuergerät gibt ("PE" für "power electric"). Es gibt ferner ein drittes Steuergerät, das für die Ansteuerung eines Getriebes vorgesehen ist ("TCU").

Das Motorsteuergerät ECU wirkt auf einen oder mehrere Aktoren A1 ein, die zur Verbrennungskraftmaschine gehören. Das Antriebssteuergerät PE wirkt auf einen oder mehrere Aktoren A2 ein, die zur elektrischen Maschine gehören. Das Getriebesteuergerät TCU wirkt auf einen oder mehrere Aktoren A3 ein, die zu dem Getriebe gehören.

Das Motorsteuergerät ECU hat gleichzeitig die Aufgabe, ein Drehmoment gemäß dem Momentenwunsch auf die beiden Antriebe zu verteilen. Je nach Situation kann es sein, dass das Motorsteuergerät das Drehmoment von der Verbrennungskraftmaschine aufbringen lässt, oder es kann sein, dass es dieses von der elektrischen Maschine aufbringen lässt; schließlich kann das Drehmoment auch auf beide Antriebe verteilt werden. Diese Funktionalität als Führungssteuergerät ist in der Zeichnung durch die Bezeichnung "Hybrid" angegeben.

Als Führungssteuergerät überprüft das Motorsteuergerät ECU als nächstes, ob der Momentenwunsch überhaupt umgesetzt werden darf. Es kann nämlich sein, dass andere Bedingungen, die neben dem Betätigen des Fahrpedals P erfüllt sein müssen, nicht erfüllt sind. Insbesondere kann eine Wegfahrsperre gegeben sein. Das Motorsteuergerät ECU sendet somit eine Anfrage an ein Wegfahrsperrsteuergerät, in der Zeichnung als "WFS-Master" bezeichnet, wobei "WFS" für "Wegfahrsperre" steht. Gleichzeitig mit dem Absenden der Anfrage sendet das Motorsteuergerät ECU an die beiden anderen Steuergeräte ECU und TCU die Mitteilung, dass es eine solche Anfrage an WFS-Master gesandt hat. Diese Mitteilung wird durch ein bestimmtes Bit übermittelt. Dadurch werden die Steuergeräte PE und TCU dazu gebracht, gleichermaßen eine Anfrage an den WFS-Master zu senden, siehe die Schritte 3a und 3b. Nach Erhalt einer solchen Anfrage und insbesondere aller Anfragen überprüft der WFS-Master, ob eine vorbestimmte Bedingung gegeben ist, in der ein Fahren des Kraftfahrzeugs erwünscht ist. Insbesondere wird bezüglich eines Schlüssels S das Gegebensein einer bestimmten Bedingung überprüft, z. B. ob der Schlüssel S in ein (nicht gezeigtes) Schloss eingesteckt ist und ungedreht ist in die sog. "Klemme 15"-Stellung. Bei einem "keyless-go-System" kann das Vorhandensein eines Transponders mit einer bestimmten Kennung in der Nähe einer Erfassungseinrichtung für einen solchen überprüft werden etc. Der WFS-Master gibt dann eine Freischaltung oder Freigabe an die drei Steuergeräte ECU, PE und TCU, mehr oder weniger gleichzeitig (Schritte 5a, 5b, 5c).

Das Motorsteuergerät ECU in seiner Funktionalität als Führungssteuergerät "Hybrid" sendet dann aufgrund des Momentenwunsches Anforderungen an die anderen Steuergeräte PE und TCU, Schritt 6, wobei im nächsten Schritt eine Umsetzung erfolgt, Schritt 7: die Aktoren A1, A2, A3 werden angesteuert; gegebenenfalls erfolgt die Umsetzung lediglich bezüglich eines Teils der Aktoren durch einen Teil der Steuergeräte.

Damit das erste Steuergerät mit der Umsetzung gemäß Schritt 7 beginnen kann, muss die Bedingung erfüllt sein, dass für alle drei Steuergeräte gleichzeitig die Freischaltung vorliegt. Das Abgeben der Mitteilung gemäß Schritt 2b durch das Führungssteuergerät an die beiden anderen Steuergeräte soll bewirken, dass eine solche Freischaltung ausreichend schnell gegeben ist. Die Bedingung, dass bei allen Geräten eine Freischaltung gegeben sein soll, ist deswegen sinnvoll, weil beim späteren Betrieb des Kraftfahrzeugs sonst nicht kurzfristig durch das Führungssteuergerät "Hybrid" in vorbestimmten Situationen relativ schnell ein Wechsel betreffend Befehle und Anforderungen erfolgen könnte.

Vorliegend soll vorgesehen sein, dass die Freischaltung nach einiger Zeit verfällt. Damit dies bezüglich der Verbrennungskraftmaschine aber nicht dann eintritt, wenn das Kraftfahrzeug alleine mit der elektrischen Maschine betrieben wird, wird die Verbrennungskraftmaschine in vorbestimmten Zeitabständen aktiviert, die kleiner sind als die Zeitdauer, nach der die Freischaltung verfallen würde.

Gemäß der vorliegenden Zeichnung und der zugehörigen Erläuterung ist das Motorsteuergerät ECU gleichzeitig Führungssteuergerät "Hybrid". Diese Funktionalität könnte jedoch genauso auch in das Steuergerät PE integriert sein, in das Steuergerät TCU integriert sein, oder gar durch ein gesondertes viertes Steuergerät (neben dem WFS-Master) bereitgestellt sein.

## Patentansprüche

1. Verfahren zum Betreiben der Antriebe eines Kraftfahrzeugs mit zumindest zwei Antrieben, in dem für zumindest zwei Antriebe ein zugehöriges Antriebssteuergerät (ECU, PE) zum Abgeben von Steuersignalen an diesen Antrieb bereitgestellt ist, und wobei ein Steuergerät als Führungssteuergerät (Hybrid) die Aufgabe hat, in einer vorbestimmten Situation zu jedem einzelnen der Antriebe, der zuvor inaktiv war, festzulegen, ob er aktiviert wird, wobei ein Aktivieren nur erfolgt, wenn ein Wegfahrsperrensteuergerät (WFS-Master) das Erfülltsein zumindest einer Bedingung in einer zuletzt verstrichenen bestimmten Zeitdauer festgestellt hat, wobei die Antriebssteuergeräte (ECU, PE) in der vorbestimmten Situation alle von dem Wegfahrsperrensteuergerät (WFS-Master) ein Signal erhalten haben müssen, durch welches das Erfülltsein der Bedingung mitgeteilt wird, bevor das erste Antriebssteuergerät mit dem Abgeben von Steuersignalen zum Aktivieren beginnt,
**dadurch gekennzeichnet, dass**
ein Verbrennungsmotor nach einer vorbestimmten Zeitdauer seiner Inaktivität durch das zugehörige Antriebssteuergerät für eine Mindestzeitdauer aktiviert wird.

2. Verfahren nach Anspruch 1, bei dem in dem Kraftfahrzeug ferner ein Getriebesteuergerät (TCU) zum Abgeben von Steuersignalen an ein Getriebe bereitgestellt ist,
**dadurch gekennzeichnet, dass**
auch das Getriebesteuergerät (TCU) von dem Wegfahrsteuergerät (WFS-Master) in der vorbestimmten Situation ein Signal erhalten haben muss, durch welches das Erfülltsein der Bedingung mitgeteilt wird, bevor es oder ein Antriebssteuergerät ein Steuersignal abgibt.

3. Verfahren nach Anspruch 1 oder 2,
**dadurch gekennzeichnet, dass**
von den Antriebssteuergeräten (ECU, PE) und ggf. dem Getriebesteuergerät (TCU) zum Erhalt eines Signals von dem Wegfahrsperrensteuergerät (WFS-Master) ein Anfragesignal an das Wegfahrsperrensteuergerät (WFS-Master) gesendet werden muss.

4. Verfahren nach Anspruch 3,
**dadurch gekennzeichnet, dass**
das Führungssteuergerät (Hybrid) eine vorbestimmte Situation ermittelt und bei Absenden eines Anfragesignals an das Wegfahrsperresteuergerät (WFS-Master) dieses auch den anderen Steuergeräten (PE, TCU) über ein gesondertes Signal mitteilt.

5. Verfahren nach einem der vorhergehenden Ansprüche,
**dadurch gekennzeichnet, dass**
die vorbestimmte Situation gegeben ist, wenn ein Fahrzeugführer eine Bedienvorgabe macht, durch die er für das Kraftfahrzeug ein von den Antrieben aufzubringendes Drehmoment anfordert und/oder wenn eine Steuereinrichtung ein von den Antrieben aufzubringendes Drehmoment anfordert.

## Claims

1. Method for operating the drives of a motor vehicle having at least two drives, in which one associated drive control device (ECU, PE) is provided for at least two drives for outputting control signals to said drive, and a control device as a guide control device (hybrid) having the task of determining whether each individual drive, which was previously inactive, is activated in a predetermined situation, an activation only taking place if an immobiliser control device (WFS master) has established that at least one condition has been fulfilled in a specific time period which has just elapsed, all the drive control devices (ECU, PE) necessarily having received a signal, which communicates that the condition has been fulfilled, from the immobiliser control device (WFS master) in the predetermined situation before the first drive control device begins to output activation control signals,
**characterised in that**
an internal combustion engine is activated by the associated drive control device for a minimum period of time after a predetermined period of inactivity.

2. Method according to claim 1, wherein a transmission control device (TCU) is further provided in the motor vehicle for outputting control signals to a transmission,
**characterised in that**
the transmission control device (TCU) must also have received a signal, which communicates that the condition has been fulfilled, from the immobiliser control device (WFS master) in the predetermined situation before said transmission control device or a drive control device outputs a control signal.

3. Method according to either claim 1 or claim 2,
**characterised in that**
a request signal must be sent by the drive control devices (ECU, PE) and optionally by the transmission control device (TCU) to the immobiliser control device (WFS master) in order to receive a signal from the immobiliser control device (WFS master).

4. Method according to claim 3,
**characterised in that**
the guide control device (hybrid) determines a predetermined situation and, when it sends out a request signal to the immobiliser control unit (WFS master), also communicates said signal to the other control devices (PE, TCU) via a separate signal.

5. Method according to any of the preceding claims,
**characterised in that**
the predetermined situation is given if a vehicle driver performs an operator control requesting a torque to be applied by the drives for the motor vehicle and/or if a control apparatus requests a torque to be applied by the drives.

## Revendications

1. Procédé pour enclencher les propulsions d'un véhicule automobile comportant au moins deux propulsions, dans lequel, pour au moins deux propulsions, un appareil de commande de propulsion correspondant (ECU, PE) est mis en oeuvre pour délivrer des signaux de commande à cette propulsion et dans lequel un appareil de commande a, en tant qu'appareil de commande de conduite (hybride), pour objet, dans une situation prédéterminée, pour chacune, individuelle, des propulsions qui était inactive auparavant, de déterminer si elle est activée, dans lequel une activation ne se produit que si un appareil de commande d'arrêt (Maître WFS) a établi le remplissage d'au moins une condition dans un intervalle de temps déterminé qui vient de s'écouler, dans lequel les appareils de commande de propulsion (ECU, PE) doivent tous avoir reçu, dans la situation prédéterminée, de l'appareil de commande d'arrêt (Maître WFS) un signal par lequel est communiqué le remplissage de la condition, avant que le premier appareil de commande de propulsion ne commence à délivrer de signaux de commande pour l'activation,
**caractérisé en ce que**
un moteur à combustion interne est activé, après une période de temps prédéterminée de son inactivité, par l'appareil de commande de propulsion correspondant pour une période de temps minimale.

2. Procédé selon la revendication 1, dans lequel, dans le véhicule automobile, on met en outre en oeuvre un appareil de commande de transmission (TCU) pour délivrer des signaux de commande à une transmission,
**caractérisé en ce que**
l'appareil de commande de transmission (TCU) doit avoir reçu de l'appareil de commande d'arrêt (Maître WFS), dans la situation prédéterminée, un signal par lequel est communiqué le remplissage de la condition avant qu'il ne délivre ou qu'un appareil de commande de propulsion ne délivre un signal de commande.

3. Procédé selon la revendication 1 ou la revendication 2,
**caractérisé en ce que**
il doit être envoyé par les appareils de commande de propulsion (ECU, PE) et éventuellement par l'appareil de commande de transmission (TCU), pour recevoir un signal de l'appareil de commande d'arrêt (Maître WFS), un signal de demande à l'appareil de commande d'arrêt (Maître WFS).

4. Procédé selon la revendication 3,
**caractérisé en ce que**
l'appareil de commande de conduite (hybride) détecte une situation prédéterminée et, lors de l'envoi d'un signal de demande à l'appareil de commande d'arrêt (Maître WFS), communique également celui-ci aux autres appareils de commande (PE, TCU) via un signal séparé.

5. Procédé selon l'une quelconque des revendications précédentes,
**caractérisé en ce que**
la situation prédéterminée se produit si un chauffeur de véhicule effectue une manoeuvre par laquelle il demande pour le véhicule un moment de torsion à appliquer par les propulsions et/ou si un dispositif de commande demande un moment de torsion à appliquer par les propulsions.
